# EUROPEAN PATENT APPLICATION

(11) **EP 3 872 374 A1**
(43) Date of publication of application: **01.09.2021**
(21) Application number: 19876348.4
(22) Date of filing: 17.10.2019
(51) Int. Cl.: F16J 15/3232, F16J 15/3264

(54) **SEALING DEVICE AND SEALING STRUCTURE**

(30) Priority: 23.10.2018 JP 2018198944
(71) Applicant: NOK Corporation, Minato-ku, Tokyo 105-8585 (JP)
(72) Inventor: MATSUI, Hiroki, Fukushima-shi, Fukushima 960-1193 (JP); KIKUCHI, Kenichi, Fukushima-shi, Fukushima 960-1193 (JP); MANAKA, Yuto, Fukushima-shi, Fukushima 960-1193 (JP); ITO, Saki, Fukushima-shi, Fukushima 960-1193 (JP)
(74) Representative: TBK
(86) International application number: PCT/JP2019/040979
(87) International publication number: WO 2020/085216

(57) **Abstract**

A sealing device seals a gap between a housing and a rotating body disposed in a hole of the housing and separates an internal space of the housing from an atmosphere side. The sealing device includes a stationary sealing member and a rotational sealing member. The rotational sealing member includes a hollow cylindrical portion into which a cylindrical portion of the rotating body is to be interference fitted, and a flange portion disposed closer to an internal space side than the hollow cylindrical portion. The stationary sealing member includes a mounted hollow cylindrical portion that is to be mounted to the housing, and a seal lip being to be brought into slidable contact with an outer peripheral surface of the hollow cylindrical portion of the rotational sealing member. The rotational sealing member further includes an auxiliary lip mounted to the flange portion, the auxiliary lip being to be brought into slidable contact with an inner peripheral surface of the mounted hollow cylindrical portion.

## Description

### TECHNICAL FIELD

The present invention relates to sealing devices and to sealing structures.

### BACKGROUND ART

A link (e.g., an arm) of an articulated robot can be rotated by a motor either directly or via a gear reducer. An oil seal for use in a gear reducer for driving a link of an articulated robot is known (Patent Document 1). Such an oil seal seals the gap between a rotating shaft disposed in a case and the case.

### BACKGROUND DOCUMENTS

### Patent Documents

Patent Document 1: JP-A-2011-89609

### SUMMARY OF THE INVENTION

In gear reducers, the flow pressure of grease contained in the internal space of the housing rises partially due to rotation of parts. As a result, there is a likelihood that the grease will leak from the internal space over the seal lip of the sealing device. It is known that a seal lip, which is disposed between parts that rotate relative to each other, has an effect of returning a liquid leaking from a space back to the space (pump effect). However, since the rotational speed of a rotating body on the output side, such as the final output shaft of a gear reducer is generally very low, it is difficult to obtain a pump effect of the seal lip.

The present invention provides a sealing device and a sealing structure, which are applied to a rotating body that rotates at a low speed, and which reduce leakage of grease to the atmosphere side.

A sealing device according to an aspect of the present invention is a sealing device adapted to seal a gap between a housing and a rotating body disposed in a hole of the housing and to separate an internal space of the housing from an atmosphere side, and includes: a stationary sealing member mounted to the housing; and a rotational sealing member mounted to the rotating body. The rotational sealing member includes a hollow cylindrical portion into which a cylindrical portion of the rotating body is to be interference fitted, and a flange portion to be disposed closer to an internal space side than the hollow cylindrical portion and extending radially outward from the hollow cylindrical portion. The stationary sealing member includes a mounted hollow cylindrical portion that is to be mounted to the housing, and a seal lip disposed radially inside the mounted hollow cylindrical portion, the seal lip being to be brought into slidable contact with an outer peripheral surface of the hollow cylindrical portion of the rotational sealing member. The mounted hollow cylindrical portion overlaps the hollow cylindrical portion of the rotational sealing member in radial directions and is disposed radially outside the flange portion. The rotational sealing member further includes an auxiliary lip mounted to the flange portion, the auxiliary lip being to be brought into slidable contact with an inner peripheral surface of the mounted hollow cylindrical portion.

In this aspect, the sealing device has a combination of the rotational sealing member and the stationary sealing member, in which the seal lip of the rotational sealing member is in contact with the outer peripheral surface of the hollow cylindrical portion of the stationary sealing member, and in which the auxiliary lip of the stationary sealing member is in contact with the inner peripheral surface of the mounted hollow cylindrical portion of the rotational sealing member. Since the hollow cylindrical portion of the rotational sealing member is in close contact with the rotating body, and the flange portion extends from the end on the internal space side of the hollow cylindrical portion, even when the flow pressure of grease contained in the internal space increases, the increased flow pressure of the grease is unlikely to act directly on the seal lip of the stationary sealing member. The flow pressure of the grease contained in the internal space acts on the flange portion of the rotational sealing member, but since the auxiliary lip mounted to the flange portion is in contact with the inner peripheral surface of the mounted hollow cylindrical portion of the rotational sealing member, the grease is unlikely to reach the seal lip of the stationary sealing member. Therefore, there is little likelihood of grease leaking to the atmosphere side. Since the auxiliary lip is in contact with the inner peripheral surface of the mounted hollow cylindrical portion of the rotational sealing member, even if there is an error in the relative mounting position of the rotational sealing member to the stationary sealing member in the axial direction, a gap is unlikely to occur between the auxiliary lip and the mounted hollow cylindrical portion, and thus the grease is unlikely to pass the auxiliary lip.

### BRIEF DESCRIPTION OF THE DRAWINGS

Fig. 1 is a partial cross-sectional view of a sealing device according to a first embodiment of the present invention;
Fig. 2 is a partial cross-sectional view of a sealing device according to a second embodiment of the present invention;
Fig. 3 is a partial cross-sectional view of a sealing device according to a third embodiment of the present invention;
Fig. 4 is a partial cross-sectional view of a sealing device according to a fourth embodiment of the present invention;
Fig. 5 is a partial cross-sectional view of a sealing device according to a fifth embodiment of the present invention; and
Fig. 6 is a partial cross-sectional view of a sealing device according to a sixth embodiment of the present invention.

### DESCRIPTION OF EMBODIMENTS

Hereinafter, multiple embodiments according to the present invention will be described with reference to the accompanying drawings. It is of note that the drawings are not necessarily to scale, and certain features may be exaggerated or omitted.

The sealing devices according to the embodiments are used for sealing grease contained in an internal space of a housing of a gear reducer used for driving a link of an articulated robot.

### FIRST EMBODIMENT

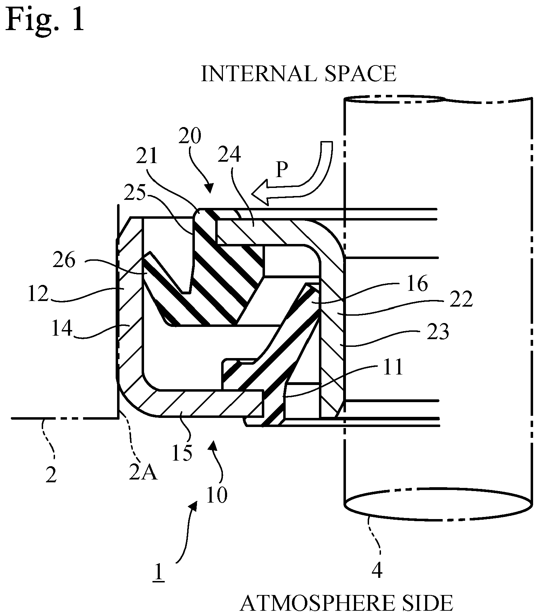

As shown in Fig. 1, a sealing device 1 according to a first embodiment seals a gap between a housing 2 of a gear reducer and a rotating body 4 disposed in a hole 2A provided in the housing 2, separating the internal space of the housing 2 from the atmosphere side. The rotating body 4 is a rotating body for driving a link (e.g., an arm) of a robot. The rotating body 4 is rotatably supported by a bearing (not shown) and is coaxially disposed in the hole 2A. The rotating body 4 may be a final output shaft of the gear reducer, but may be another rotating body.

The rotor 4 is cylindrical, the hole 2A has a circular cross section, and the sealing device 1 is annular. In Fig. 1, only respective left halves are shown.

The sealing device 1 includes a stationary sealing member 10 that is to be mounted to the housing 2, and a rotational sealing member 20 that is to be mounted to the rotating body 4.

The rotational sealing member 20 has a composite structure having an elastic ring 21 and a rigid ring 22. The elastic ring 21 is made of an elastic material, for example, an elastomer. The rigid ring 22 is made of a rigid material, for example, a metal.

The rigid ring 22 has a hollow cylindrical portion 23 and a flange portion 24. The cylindrical portion of the rotating body 4 is to be interference fitted into the hollow cylindrical portion 23. Thus, the rotational sealing member 20 rotates together with the rotating body 4. The flange portion 24 is disposed closer to the internal space side than the hollow cylindrical portion 23, and extends radially outward from the end on the internal space side of the hollow cylindrical portion 23 and perpendicular to the axial direction of the rotating body 4.

The elastic ring 21 has a block 25 mounted to the outer end of the flange portion 24 of the rigid ring 22, and an auxiliary lip 26 extends from the block 25.

The stationary sealing member 10 has a composite structure having an elastic ring 11 and a rigid ring 12. The elastic ring 11 is made of an elastic material, for example, an elastomer. The rigid ring 12 is made of a rigid material, for example, a metal.

The rigid ring 12 has a mounted hollow cylindrical portion 14 and an end wall portion 15. The mounted hollow cylindrical portion 14 is to be mounted to the housing 2. Although the mounting scheme is not limited, for example, the mounted hollow cylindrical portion 14 may be interference fitted into the hole 2A. The end wall portion 15 expands radially inward from the end on the atmosphere side of the mounted hollow cylindrical portion 14, and perpendicular to the axial direction of the rotating body 4.

The elastic ring 11 is mounted to the inner end of the end wall portion 15 of the rigid ring 12. A seal lip 16 is formed on the elastic ring 11. The seal lip 16 is a truncated cone- shaped plate extending obliquely inward in radial directions and toward the internal space side from a portion of the elastic ring 11 mounted to the rigid ring 12. The distal end of the seal lip 16 is brought into slidable contact with the outer peripheral surface of the hollow cylindrical portion 23 of the rotational sealing member 20. Fig. 1 shows the seal lip 16 in a state of compressive deformation by being brought into contact with the outer peripheral surface of the hollow cylindrical portion 23.

Whereas the rotational sealing member 20 rotates together with the rotating body 4, the stationary sealing member 10 is mounted to the housing 2. As will be apparent from Fig. 1, the mounted hollow cylindrical portion 14 of the stationary sealing member 10 is composed of only the rigid ring 12, whereas the seal lip 16 is composed of only the elastic ring 11. The mounted hollow cylindrical portion 14 is disposed coaxially with the hollow cylindrical portion 23 of the rotational sealing member 20, and overlaps the hollow cylindrical portion 23 in radial directions. The mounted hollow cylindrical portion 14 is disposed radially outside the flange portion 24.

The auxiliary lip 26 of the rotational sealing member 20 is a truncated cone-shaped plate extending obliquely outward in radial directions and toward the internal space side from the block 25. The distal end of the auxiliary lip 26 is brought into slidable contact with the inner peripheral surface of the mounted hollow cylindrical portion 14 of the stationary sealing member 10. Fig. 1 shows the auxiliary lip 26 in a state of compressive deformation by being brought into contact with the inner peripheral surface of the mounted hollow cylindrical portion 14.

The sealing device 1 has an outline in which a side (the seal lip 16) of the stationary sealing member 10 having a substantially U-shaped cross section is fitted into the interior space of the rotational sealing member 20 also having a substantially U-shaped cross section. The seal lip 16 of the stationary sealing member 10 is brought into contact with the hollow cylindrical portion 23 of the rotational sealing member 20 at a position that radially overlaps the mounted hollow cylindrical portion 14 of the stationary sealing member 10. In addition, the auxiliary lip 26 of the rotational sealing member 20 overlaps the seal lip 16 of the stationary sealing member 10 in radial directions.

In this embodiment, the sealing device 1 is constituted of a combination of the rotational sealing member 20 and the stationary sealing member 10, in which the seal lip 16 of the rotational sealing member 20 is in contact with the outer peripheral surface of the hollow cylindrical portion 23 of the stationary sealing member 10, and in which the auxiliary lip of the stationary sealing member 10 is in contact with the inner peripheral surface of the mounted hollow cylindrical portion 14 of the rotational sealing member 20. Under rotation of the parts of the gear reducer, the flow pressure of the grease contained in the internal space of the housing 2 may partially increase. However, since the hollow cylindrical portion 23 of the rotational sealing member 20 is in close contact with the rotating body 4, and the flange portion 24 expands from the end on the internal space side of the hollow cylindrical portion 23, even with an increase in the flow pressure of the grease (shown by arrow P in Fig. 1), the increase in the flow pressure of the grease is unlikely to be directly applied to the seal lip 16 of the stationary sealing member 10.

The flow pressure P of the grease in the internal space is applied to the flange portion 24 of the rotational sealing member 20, but since the auxiliary lip 26 mounted to the flange portion 24 is in contact with the inner peripheral surface of the mounted hollow cylindrical portion 14 of the rotational sealing member 20, the grease is unlikely to reach the seal lip 16 of the stationary sealing member 10. Therefore, there is little likelihood of grease leaking to the atmosphere side.

Since the auxiliary lip 26 is in contact with the inner peripheral surface of the mounted hollow cylindrical portion 14 of the rotational sealing member 20, even if there is an error in the relative mounting position of the rotational sealing member 20 to the stationary sealing member 10 in the axial direction, a gap is unlikely to occur between the auxiliary lip 26 and the mounted hollow cylindrical portion 14, and thus the grease is unlikely to pass the auxiliary lip 26.

The auxiliary lip 26 extends obliquely outward in radial directions and toward the internal space side from the block 25. Therefore, when the auxiliary lip 26 is subjected to the flow pressure P of the grease contained in the internal space, the auxiliary lip 26 is deformed outward in radial directions, and is likely to be brought into close contact with the inner peripheral surface of the mounted hollow cylindrical portion 14 of the rotational sealing member 20. Therefore, there is even less likelihood of grease leaking to the atmosphere side.

Since the auxiliary lip 26 overlaps the seal lip 16 in radial directions, even if the grease contained in the internal space passes the auxiliary lip 26, the grease is unlikely to reach the contact position where the seal lip 16 contacts the hollow cylindrical portion 23 of the rotational sealing member 20. Therefore, there is even less likelihood of grease leaking to the atmosphere side.

Furthermore, since the auxiliary lip 26 overlaps the seal lip 16 in radial directions, the axial length of the sealing device 1 can be readily reduced. Furthermore, the seal lip 16 is brought into contact with the hollow cylindrical portion 23 of the rotational sealing member 20 at a position that radially overlaps the mounted hollow cylindrical portion 14, and thus the axial length of the sealing device 1 can be readily reduced. In particular, in this embodiment, the rotational sealing member 20 does not protrude to the atmosphere side of the end wall portion 15 of the rigid ring 12 of the stationary sealing member 10. Furthermore, in the stationary sealing member 10, the portion protruding to the atmosphere side from the end wall portion 15 of the rigid ring 12 is only a part of the elastic ring 11. Therefore, the axial length of the sealing device 1 can be reduced.

Furthermore, since the mounted hollow cylindrical portion 14 of the stationary sealing member 10 is composed only of the rigid ring 12, the dimensions of the sealing device 1 can be reduced.

Furthermore, in this embodiment, the sealing device 1 has an outline in which a side of the stationary sealing member 10 having a substantially U-shaped cross-sectional is fitted into the interior space of the rotational sealing member 20 also having a substantially U-shaped cross-section. Therefore, it is possible to reduce intrusion of foreign matter (including water or dust) into the internal space from the atmosphere side.

### SECOND EMBODIMENT

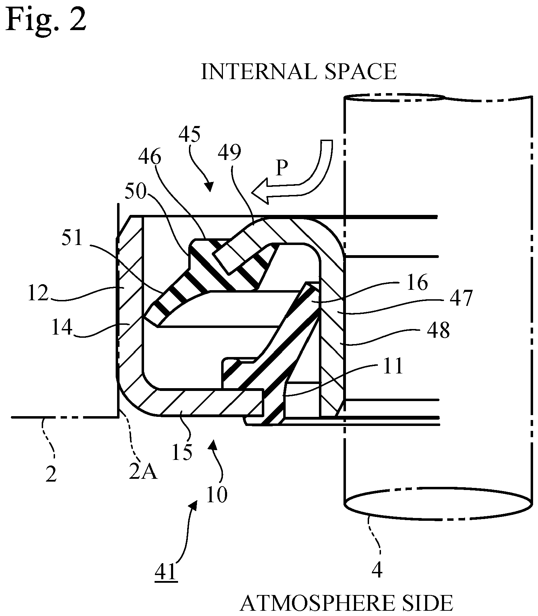

Fig. 2 shows a sealing device 41 according to a second embodiment of the present invention. In Fig. 2 and subsequent drawings, like reference symbols are used to denote like components that have already been described; and detailed description of those components is omitted.

The sealing device 41 includes a stationary sealing member 10 that is the same as the stationary sealing member 10 of the first embodiment, and a rotational sealing member 45 that is different from the rotational sealing member 20 of the first embodiment.

The rotational sealing member 45 has a composite structure having an elastic ring 46 and a rigid ring 47. The elastic ring 46 is made of an elastic material, for example, an elastomer. The rigid ring 47 is made of a rigid material, for example, a metal.

The rigid ring 47 has a hollow cylindrical portion 48 and a flange portion 49. The cylindrical portion of the rotating body 4 is to be interference fitted into the hollow cylindrical portion 48. Therefore, the rotational sealing member 45 rotates together with the rotating body 4. The flange portion 49 is to be disposed closer to the internal space side than the hollow cylindrical portion 48, and extends radially outward from the end on the internal space side of the hollow cylindrical portion 48 perpendicular to the axial direction of the rotating body 4. Furthermore, the outer end portion of the flange portion 49 extends obliquely outward in radial directions and toward the atmosphere side.

The elastic ring 46 has a block 50 mounted to the outer end of the flange portion 49 of the rigid ring 47 and an auxiliary lip 51 extending from the block 50. The auxiliary lip 51 is a truncated cone- shaped plate that extends obliquely outward in radial directions and toward the atmosphere side from the block 50. The distal end of the auxiliary lip 51 is brought into slidable contact with the inner peripheral surface of the mounted hollow cylindrical portion 14 of the stationary sealing member 10. Fig. 2 shows the auxiliary lip 51 in a state of compressive deformation by being brought into contact with the inner peripheral surface of the mounted hollow cylindrical portion 14.

Also in this embodiment, substantially the same effects as in the first embodiment are achieved. However, since the auxiliary lip 26 of the first embodiment extends radially outward and toward the internal space side, compared to the second embodiment, in the first embodiment, there is less likelihood that grease will leak to the atmosphere side.

### THIRD EMBODIMENT

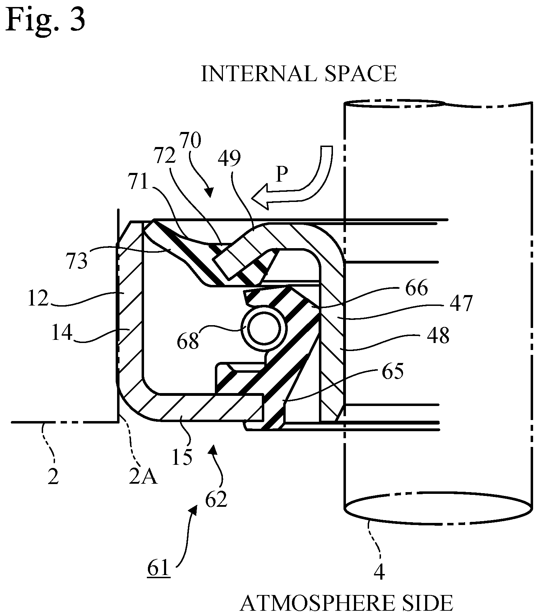

Fig. 3 shows a sealing device 61 according to a third embodiment of the present invention. The sealing device 61 includes a stationary sealing member 62 and a rotational sealing member 70.

The rotational sealing member 70 has a composite structure having an elastic ring 71 and a rigid ring 47, which is the same as the rigid ring 47 of the second embodiment. The elastic ring 71 is made of an elastic material, for example, an elastomer. The elastic ring 71 has a block 72 mounted to the outer end of the flange portion 49 of the rigid ring 47 and an auxiliary lip 73 extending from the block 72. The auxiliary lip 73 is a truncated cone-shaped plate extending obliquely outward in radial directions and toward the internal space side from the block 72. The distal end of the auxiliary lip 73 is brought into slidable contact with the inner peripheral surface of the mounted hollow cylindrical portion 14 of the stationary sealing member 10. Fig. 3 shows the auxiliary lip 73 in a state of compressive deformation by being brought into contact with the inner peripheral surface of the mounted hollow cylindrical portion 14.

The elastic ring 65 is mounted to the inner end of the end wall portion 15 of the rigid ring 12. The elastic ring 65 has a hollow cylindrical portion that extends toward the internal space side of the end wall portion 15 (hollow cylindrical portion that extends toward the flange portion 49 of the rotational sealing member 70), and a seal lip 66 is formed in the hollow cylindrical portion. The seal lip 66 is brought into slidable contact with the outer peripheral surface of the hollow cylindrical portion 48 of the rotational sealing member 70. The seal lip 66 is a protrusion having a triangular cross section, and has an inclined surface at the atmosphere side and another inclined surface at the internal space side. Fig. 3 shows the seal lip 66 in a state of compressive deformation by being brought into contact with the outer peripheral surface of the hollow cylindrical portion 48.

A garter spring 68 is wound around the hollow cylindrical portion of the elastic ring 65 to compress the seal lip 66 radially inward. However, the garter spring 68 is not absolutely essential.

Also in this embodiment, substantially the same effects as those in the first embodiment can be achieved. However, since the auxiliary lip 26 of the first embodiment overlaps the seal lip 16 in radial directions, compared to the third embodiment, in the first embodiment the axial length of the sealing device can be more readily reduced.

### FOURTH EMBODIMENT

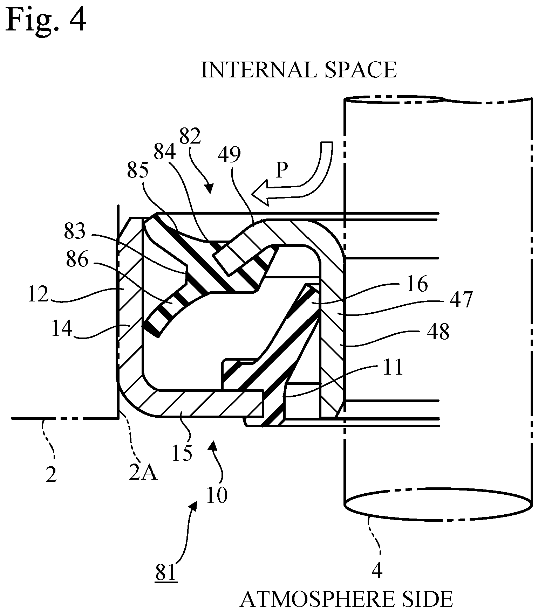

Fig. 4 shows a sealing device 81 according to a fourth embodiment of the present invention. The sealing device 81 includes a stationary sealing member 10 that is the same as the stationary sealing member 10 of the first embodiment, and a rotational sealing member 82 that is similar to the rotational sealing member 45 of the second embodiment.

The rotational sealing member 82 has a composite structure having an elastic ring 83 and a rigid ring 47, which is the same as the rigid ring 47 of the second embodiment. The elastic ring 83 is made of an elastic material, for example, an elastomer. The elastic ring 83 has a block 84 attached to the outer end of the flange portion 49 of the rigid ring 47 and two auxiliary lips 85 and 86 extending from the block 84. The auxiliary lip 85 is a truncated cone-shaped plate that extends obliquely outward in radial directions and toward the internal space side from the block 84. The distal end of the auxiliary lip 85 is brought into slidable contact with the inner peripheral surface of the mounted hollow cylindrical portion 14 of the stationary sealing member 10. The auxiliary lip 86 is a truncated cone-shaped plate that extends obliquely outward in radial directions and toward the atmosphere side from the block 84. The distal end of the auxiliary lip 86 is brought into slidable contact with the inner peripheral surface of the mounted hollow cylindrical portion 14 of the stationary sealing member 10. Fig. 4 shows the auxiliary lips 85 and 86 in a state of compressive deformation by being brought into contact with the inner peripheral surface of the mounted hollow cylindrical portion 14.

Also in this embodiment, the same effects as those in the first embodiment can be achieved. In this embodiment, since the rotational sealing member 82 has two auxiliary lips 85 and 86, the grease is less likely to reach the seal lip 16 of the stationary sealing member 10.

### FIFTH EMBODIMENT

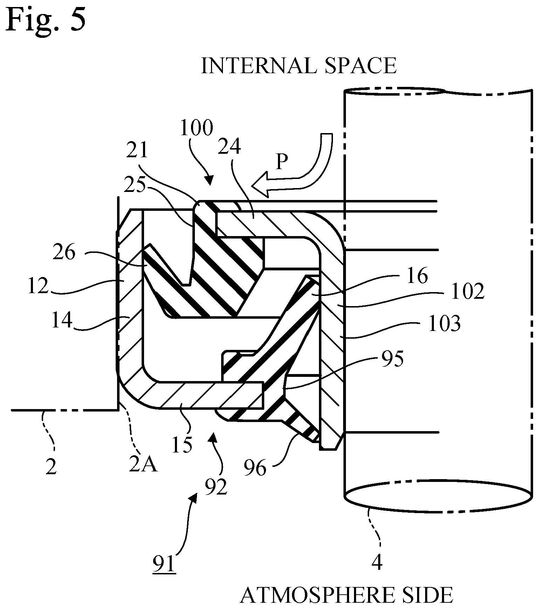

Fig. 5 shows a sealing device 91 according to a fifth embodiment of the present invention. The sealing device 91 includes a stationary sealing member 92 similar to the stationary sealing member 10 of the first embodiment, and a rotational sealing member 100 similar to the rotational sealing member 20 of the first embodiment. The stationary sealing member 92 has the same rigid ring 12 as the rigid ring 12 in the first embodiment, and an elastic ring 95 similar to the elastic ring 11 in the first embodiment.

The elastic ring 95 of the stationary sealing member 92 has the same seal lip 16 as in the first embodiment. Although not essential, a garter spring 18 is provided to compress the seal lip 16 radially inwardly. In addition, the elastic ring 95 has a dust lip 96. The dust lip 96 is a truncated cone-shaped plate that extends obliquely inward in radial directions and toward the atmosphere side from a portion of the elastic ring 95 mounted to the rigid ring 12. The distal end of the dust lip 96 is brought into slidable contact with the outer peripheral surface of the hollow cylindrical portion 103 of the rotational sealing member 100. Whereas the seal lip 16 is provided primarily for sealing grease, the dust lip 96 is provided to reduce entry of foreign matter from the atmosphere side.

The rotational sealing member 100 has a composite structure and includes an elastic ring 21 that is the same as the elastic ring 21 in the first embodiment, and a rigid ring 102 that is similar to the rigid ring 22 in the first embodiment. The rigid ring 102 is made of a rigid material, for example, a metal. The rigid ring 102 has a hollow cylindrical portion 103 and a flange portion 24, which is the same as the flange portion 24 in the first embodiment. The cylindrical portion of the rotating body 4 is to be interference fitted into the hollow cylindrical portion 103. Therefore, the rotational sealing member 20 rotates together with the rotating body 4. The flange portion 24 is to be disposed closer to the internal space side than the hollow cylindrical portion 103, and expands radially outward from the end on the internal space side of the hollow cylindrical portion 103 perpendicular to the axial direction of the rotating body 4. Since the distal end of the dust lip 96 is in contact with the hollow cylindrical portion 103, the hollow cylindrical portion 103 of the rotational sealing member 100 extends further towards the atmosphere side than the hollow cylindrical portion 23 of the rotational sealing member 20 in the first embodiment.

Instead of the rotational sealing member 100, there can be used the rotational sealing member 20 of the first embodiment, in which the distal end of the dust lip 96 may be in contact with the outer peripheral surface of the rotating body 4.

In this embodiment, the hollow cylindrical portion 103 of the rotational sealing member 100 and the dust lip 96 of the stationary sealing member 92 protrude further towards the atmosphere side than the end wall portion 15 of the rigid ring 12 of the stationary sealing member 92, as a result of which the axial length of the sealing device 61 is larger than that in the first embodiment.

However, for the same reason as in the first embodiment, there is little likelihood of leakage of grease to the atmosphere side.

The fifth embodiment is a variation of the first embodiment, but the elastic rings 11 and 65 of the second to fourth embodiments may be provided with the dust lip 96.

### SIXTH EMBODIMENT

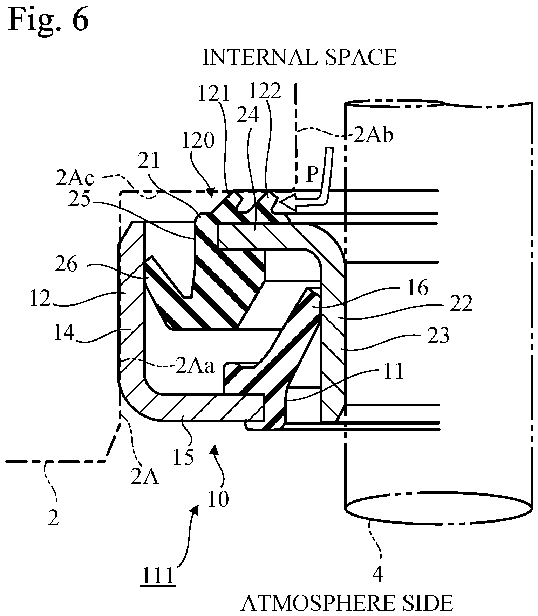

Fig. 6 shows a sealing device 111 according to a sixth embodiment of the present invention. The sealing device 111 includes a stationary sealing member 10 that is the same as the stationary sealing member 10 of the first embodiment, and a rotational sealing member 120 that is different from the rotational sealing member 20 in the first embodiment.

In this embodiment, the hole 2A of the housing 2 has a large diameter portion 2Aa, a small diameter portion 2Ab, a step wall portion 2Ac between the large diameter portion 2Aa and the small diameter portion 2Ab. The diameter of the large diameter portion 2Aa is greater than the diameter of the small diameter portion 2Ab. The large diameter portion 2Aa is disposed closer to the atmosphere side than the small diameter portion 2Ab. The step wall portion 2Ac between the large diameter portion 2Aa and the small diameter portion 2Ab extends perpendicular to the axial direction of the rotating body 4. The mounted hollow cylindrical portion 14 of the stationary sealing member 10 is to be mounted to the large diameter portion 2Aa.

The elastic ring 21 of the rotational sealing member 120 has a block 25 mounted to the outer end of the flange portion 24 of the rigid ring 22, and an auxiliary lip 26 that extends from the block 25, in a similar manner to the rotational sealing member 20 of the first embodiment. Furthermore, the elastic ring 21 of the rotational sealing member 120 has at least one auxiliary side lip that extends toward the internal space side. In this embodiment, there are provided two concentric auxiliary side lips 121 and 122.

The auxiliary side lips 121 and 122 are mounted to the surface on the internal space side of the flange portion 24, and are truncated cone-shaped plates that extend obliquely inward in radial directions and toward the internal space side. The distal ends of the auxiliary side lips 121 and 122 are brought into slidable contact with the step wall portion 2Ac of the hole 2A

In this embodiment, the same effects as those of the first embodiment can be achieved.

Furthermore, according to this embodiment, the rotational sealing member 120 includes the auxiliary side lips 121 and 122, which are brought into contact with the step wall portion 2Ac of the hole 2A of the housing 2, in addition to the auxiliary lip 26, which is brought into contact with the inner peripheral surface of the mounted hollow cylindrical portion 14 of the stationary sealing member 10. Therefore, the grease contained in the internal space is blocked by the auxiliary lip 26 and the auxiliary side lips 121 and 122, and is unlikely to reach the seal lip 16 of the stationary sealing member 10. Therefore, there is even less likelihood of the grease leaking to the atmosphere side.

Furthermore, according to this embodiment, the auxiliary side lips 121 and 122 extend obliquely inward in radial directions and toward the internal space side. Therefore, when the auxiliary side lips 121 and 122 are subjected to the flow pressure P of the grease in the small diameter portion 2Ab, the auxiliary side lips 121 and 122 are deformed outward in radial directions, and thus are likely to be in close contact with the step wall portion 2Ac of the hole 2A of the housing 2. Accordingly, there is even less likelihood of the grease leaking to the atmosphere side.

### MODIFICATIONS

Although the present invention has been described with references to preferred embodiments thereof, it will be understood by those skilled in the art that various changes in form and detail may be made thereto without departing from the scope of the invention as defined by the claims. Such variations, alterations, and modifications are intended to be included within the scope of the present invention.

For example, in the above-described embodiments, the sealing device seals the gap between the housing 2 of the gear reducer and the rotating body 4 disposed in the hole 2A provided in the housing 2 in order to contain the grease in the interior space of the housing of the gear reducer that drives a link of an articulated robot. However, the sealing device may also be used to contain grease in the interior space of the housing of another gear reducer.

Furthermore, the sealing device may be used to seal a gap between the housing and the rotating body rotating at a low speed in a hole provided in the housing in order to contain the grease in the interior space of the housing of a device other than the gear reducer. For example, the sealing device may be used to seal a gap between the rotational shaft of a turntable of a precision machine and the housing of the rotational shaft. Alternatively, the sealing device may be used to seal a gap between the rotational shaft of a pivoting camera or a pivoting fan and the housing of the rotational shaft.

The above embodiments may be combined as long as they are not inconsistent. For example, the garter spring 68 in the third embodiment (see Fig. 3) may be provided in other embodiments. The two auxiliary lips 85 and 86 in the fourth embodiment (see Fig. 4) may be provided in other embodiments. The dust lip 96 in the fifth embodiment (see Fig. 5) may be provided in other embodiments. The auxiliary side lips 121 and 122 in the sixth embodiment (see Fig. 6) may be provided in other embodiments.

Aspects of the present invention are also set out in the following numbered clauses:

Clause 1. A sealing device adapted to seal a gap between a housing and a rotating body disposed in a hole of the housing and to separate an internal space of the housing from an atmosphere side, including:
a stationary sealing member mounted to the housing; and
a rotational sealing member mounted to the rotating body,
the rotational sealing member including a hollow cylindrical portion into which a cylindrical portion of the rotating body is to be interference fitted, and a flange portion to be disposed closer to an internal space side than the hollow cylindrical portion and expanding radially outward from the hollow cylindrical portion,
the stationary sealing member including a mounted hollow cylindrical portion that is to be mounted to the housing, and a seal lip disposed radially inside the mounted hollow cylindrical portion, the seal lip being to be brought into slidable contact with an outer peripheral surface of the hollow cylindrical portion of the rotational sealing member,
the mounted hollow cylindrical portion overlapping the hollow cylindrical portion of the rotational sealing member in radial directions and disposed radially outside the flange portion,
the rotational sealing member further including an auxiliary lip mounted to the flange portion, the auxiliary lip being to be brought into slidable contact with an inner peripheral surface of the mounted hollow cylindrical portion.

Clause 2. The sealing device according to clause 1, wherein the auxiliary lip overlaps the seal lip in radial directions.

According to this clause, even if the grease contained in the internal space passes the auxiliary lip, the grease is unlikely to reach the contact position where the seal lip contacts the hollow cylindrical portion of the rotational sealing member. Therefore, there is even less likelihood of grease leaking to the atmosphere side. In addition, by such an arrangement, the length of the sealing device in the axial direction can be readily shortened.

Clause 3. The sealing device according to clause 1 or 2, wherein the auxiliary lip extends obliquely outward in radial directions and toward the internal space side.

According to this clause, when the auxiliary lip is subjected to the flow pressure of the grease contained in the internal space, the auxiliary lip is deformed outward in radial directions, and is likely to be in close contact with the inner peripheral surface of the mounted hollow cylindrical portion of the rotational sealing member. Therefore, there is even less likelihood of grease leaking to the atmosphere side.

Clause 4. The sealing device according to any one of clauses 1-3, wherein the seal lip is brought into contact with the hollow cylindrical portion of the rotational sealing member at a position that radially overlaps the mounted hollow cylindrical portion.

By such an arrangement, the length of the sealing device in the axial direction can be readily shortened.

Clause 5. The sealing device according to any one of clauses 1-4, wherein the hole of the housing includes a large diameter portion, a small diameter portion, and a step wall portion between the large diameter portion and the small diameter portion, a diameter of the large diameter portion being greater than a diameter of the small diameter portion, the large diameter portion being arranged closer to the atmosphere side than the small diameter portion,
the mounted hollow cylindrical portion of the stationary sealing member being mounted to the large diameter portion,
the rotational sealing member further including at least one auxiliary side lip mounted to the flange portion and extending toward the internal space side, the auxiliary side lip being to be brought into slidable contact with the step wall portion of the hole.

According to this clause, the rotational sealing member includes the auxiliary side lip, which is brought into contact with the step wall portion of the hole of the housing, in addition to the auxiliary lip, which is brought into contact with the inner peripheral surface of the mounted hollow cylindrical portion of the stationary sealing member. Therefore, the grease contained in the internal space is blocked by the auxiliary lip and the auxiliary side lip, and is unlikely to reach the seal lip of the stationary sealing member. Therefore, there is even less likelihood risk of the grease leaking to the atmosphere side.

Clause 6. The sealing device according to clause 5, wherein the auxiliary side lip extends obliquely inward in radial directions and toward the internal space side.

According to this clause, when the auxiliary side lip is subjected to the flow pressure P of grease in the small diameter portion, the auxiliary side lip is deformed outward in radial directions, and is likely to be in close contact with the step wall portion of the hole of the housing. Therefore, there is even less likelihood of the grease leaking to the atmosphere side.

Clause 7. The sealing device according to any one of clauses 1-6, wherein the stationary sealing member includes an elastic ring made of an elastic material and a rigid ring made of a rigid material,
the mounted hollow cylindrical portion being composed of only the rigid ring,
the seal lip being composed of only the elastic ring.

According to this clause, since the mounted hollow cylindrical portion is composed of only the rigid ring, it is possible to reduce the dimensions of the sealing device.

Clause 8. The sealing device according to any one of clauses 1-7, wherein the stationary sealing member includes an elastic ring made of an elastic material and a rigid ring made of a rigid material, and wherein the rotational sealing member does not protrude to the atmosphere side from the rigid ring of the stationary sealing member.

According to this clause, since the rotational sealing member does not protrude to the atmosphere side from the rigid ring of the stationary sealing member, it is possible to reduce the axial length of the sealing device.

Clause 9. The sealing device according to any one of clauses 1-8, wherein the housing is a housing of a gear reducer, and wherein the rotating body is a part of the gear reducer.

As described above, since the rotational speed of the rotating body on the output side, such as the final output shaft of the gear reducer, is generally very low, it is difficult to obtain the pump effect of the seal lip. However, since the flow pressure of the grease is unlikely to directly act on the seal lip of the stationary sealing member even when a flow pressure of the grease contained in the internal space increases, there is less likelihood of the grease leaking to the atmosphere side.

Clause 10. A sealing structure, including
a housing provided with a hole;
a rotating body disposed in the hole of the housing; and
the sealing device according to any one of clauses 1-9.

### REFERENCE SYMBOLS

1, 41, 61, 81, 91, 111: Sealing device
2: Housing
2A: Hole
2Aa: Large diameter portion
2Ab: Small diameter portion
2Ac: Step wall portion
4: Rotating body
10, 62, 92: Stationary sealing member
11, 65: Elastic ring
12: Rigid ring
14: Mounted hollow cylindrical portion
15: End wall portion
16, 66: Seal lip
20, 45, 70, 82, 100, 120: Rotational sealing member
21, 46, 71, 83, 95: Elastic ring
22, 47, 102: Rigid ring
23, 48, 103: Hollow cylindrical portion
24, 49: Flange portion
26, 51, 73, 85, 86: Auxiliary lip
121, 122: Auxiliary side lip

## Claims

1. A sealing device adapted to seal a gap between a housing and a rotating body disposed in a hole of the housing and to separate an internal space of the housing from an atmosphere side, comprising:
a stationary sealing member mounted to the housing; and
a rotational sealing member mounted to the rotating body,
the rotational sealing member comprising a hollow cylindrical portion into which a cylindrical portion of the rotating body is to be interference fitted, and a flange portion to be disposed closer to an internal space side than the hollow cylindrical portion and expanding radially outward from the hollow cylindrical portion,
the stationary sealing member comprising a mounted hollow cylindrical portion that is to be mounted to the housing, and a seal lip disposed radially inside the mounted hollow cylindrical portion, the seal lip being to be brought into slidable contact with an outer peripheral surface of the hollow cylindrical portion of the rotational sealing member,
the mounted hollow cylindrical portion overlapping the hollow cylindrical portion of the rotational sealing member in radial directions and disposed radially outside the flange portion,
the rotational sealing member further comprising an auxiliary lip mounted to the flange portion, the auxiliary lip being to be brought into slidable contact with an inner peripheral surface of the mounted hollow cylindrical portion.

2. The sealing device according to claim 1, wherein the auxiliary lip overlaps the seal lip in radial directions.

3. The sealing device according to claim 1 or 2, wherein the auxiliary lip extends obliquely outward in radial directions and toward the internal space side.

4. The sealing device according to any one of claims 1-3, wherein the seal lip is brought into contact with the hollow cylindrical portion of the rotational sealing member at a position that radially overlaps the mounted hollow cylindrical portion.

5. The sealing device according to any one of claims 1-4, wherein the hole of the housing comprises a large diameter portion, a small diameter portion, and a step wall portion between the large diameter portion and the small diameter portion, a diameter of the large diameter portion being greater than a diameter of the small diameter portion, the large diameter portion being arranged closer to the atmosphere side than the small diameter portion,
the mounted hollow cylindrical portion of the stationary sealing member being mounted to the large diameter portion,
the rotational sealing member further comprising at least one auxiliary side lip mounted to the flange portion and extending toward the internal space side, the auxiliary side lip being to be brought into slidable contact with the step wall portion of the hole.

6. The sealing device according to claim 5, wherein the auxiliary side lip extends obliquely inward in radial directions and toward the internal space side.

7. The sealing device according to any one of claims 1-6, wherein the stationary sealing member comprises an elastic ring made of an elastic material and a rigid ring made of a rigid material,
the mounted hollow cylindrical portion being composed of only the rigid ring,
the seal lip being composed of only the elastic ring.

8. The sealing device according to any one of claims 1-7, wherein the stationary sealing member comprises an elastic ring made of an elastic material and a rigid ring made of a rigid material, and wherein the rotational sealing member does not protrude to the atmosphere side from the rigid ring of the stationary sealing member.

9. The sealing device according to any one of claims 1-8, wherein the housing is a housing of a gear reducer, and wherein the rotating body is a part of the gear reducer.

10. A sealing structure, comprising
a housing provided with a hole;
a rotating body disposed in the hole of the housing; and
the sealing device according to any one of claims 1-9.
